# EUROPEAN PATENT APPLICATION

(11) **EP 1 802 111 A2**
(43) Date of publication of application: **27.06.2007**
(21) Application number: 06125971.9
(22) Date of filing: 12.12.2006
(51) Int. Cl.: H04N 5/50, H04N 5/445

(54) **Broadcast Receiving Apparatus and Method**

(30) Priority: 22.12.2005 KR 20050128016
(71) Applicant: SAMSUNG ELECTRONICS CO., LTD., Suwon-si, Gyeonggi-do (KR)
(72) Inventor: KIM, Mi-kyung, Yongin-si (KR)
(74) Representative: Waddington, Richard

(57) **Abstract**

Disclosed are a broadcast receiving apparatus and a broadcast receiving method. The broadcast receiving apparatus includes a displaying part; a signal receiving part (110) for receiving a broadcast signal corresponding to one of a plurality of channels; a user inputting part (140) where a user inputs a first selecting information; and a controller (170) for causing generation and display of an indication of a plurality of channel information corresponding to the inputted first selecting information, and controlling the signal receiving part (110) to receive a broadcast signal corresponding to a channel selected according to an input of a second selecting information.

## Description

The present invention relates to a broadcast receiving apparatus and a method thereof, and more particularly, to a broadcast receiving apparatus and a method thereof capable of selecting a channel promptly without difficulty.

Generally, a broadcast receiving apparatus such as a TV receives various types of broadcast signal such as terrestrial broadcast, cable broadcast, satellite broadcast and the like, and processes a predetermined signal of the received broadcast signal. Then, the broadcast receiving apparatus displays an image on the basis of the processed broadcast signal. The broadcast signal received by this broadcast receiving apparatus is corresponded to one of a plurality of channels. The broadcast receiving apparatus receives a broadcast signal of a channel selected by a user. This process is referred to as a tuning process.

According to a conventional broadcast receiving apparatus, an image of a received channel is displayed on a screen for a user. Then, the user is allowed to change a channel by directly inputting a channel number of a desired channel or manipulating upper and lower buttons or left and right buttons on a remote controller.

However, in recent broadcast environment where there are hundreds of channels such as digital TV broadcast, cable TV broadcast and the like, it is not easy for a user to select a desired channel promptly.

For example, in the case of selecting a channel having a channel number of 267-3, it is quite a troublesome job to put the numbers and the hyphen one by one. If necessary, the channel 267 may be selected, and then the digit 3 may be selected using the upper and lower buttons or left and right buttons. However, this is also troublesome. Similarly, in the case of selecting a channel having a channel name of BTV-3, it is similarly troublesome.

Accordingly, it is an object of the present invention to provide a broadcast receiving apparatus and a method thereof capable of selecting a channel promptly for reducing difficulty.

Additional aspects and/or advantages of the present invention will be set forth in the description which follows or, will be obvious from the description, or may be learned by practice of the present invention.

According to the present invention there is provided an apparatus and method as set forth in the appended claims. Preferred features of the invention will be apparent from the dependent claims, and the description which follows.

The present invention provides a broadcast receiving apparatus comprising a signal receiving part for receiving a broadcast signal corresponding to one of a plurality of channels; a user inputting part where a user may input a first selecting information of the channel; a processor for generating an indication of a plurality of channels for visual display; and a controller for controlling the processor to generate the indication of a plurality of channels corresponding to the inputted first selecting information, and controlling the signal receiving part to receive a broadcast signal corresponding to a selected channel, among the indicated plurality of channels, according to an input of a second selecting information.

Preferably, when an input of the first selecting information has been sustained during a first time, the controller is operable to allow an indication of a plurality of channels to be displayed on a displaying part.

Preferably, while an input of the first selecting information has been sustained, the controller is operable to allow at least one channel among the indicated channels to be emphasized sequentially and displayed on the displaying part. While an input of the selecting information has been sustained during a second time after one of the channels among the indicated channels is emphasized, the controller is operable to allow another channel to be emphasized and displayed. Further, the controller is operable to determine that the channel selected is the emphasized channel when the second selecting information is received.

Preferably, the emphasizing may be accomplished by highlighting the channel in the indication of a plurality of channels.

Preferably, the selecting information comprises a number and/or an alphabet. The channel information comprises a channel number having the number or a channel name having the alphabet.

According to another aspect of the present invention there is provided a broadcast receiving method comprising receiving a selecting information from a user; generating a plurality of items of channel information corresponding to the inputted selecting information; checking whether a user selects one among the generated items of channel information; and receiving a broadcast signal corresponding to the selected channel information.

Preferably, the displaying the plural items of channel information, when an input of the selecting information has sustained during a first time, displays the plural items of channel information on the displaying part.

Preferably, the displaying the items of channel information, while the input of the selecting information has sustained, sequentially highlights at least one item of channel information to display. Further, during the displaying of the items of channel information, when the input of the selecting information has sustained during a second time after one of the plural items of channel information was highlighted and displayed, highlights another of the plural items of channel information to display.

Also, the channel information checking determines that the channel information that was highlighted and displayed, at the time the input of selecting information is finished, is selected.

Preferably, the selecting information comprises a number or an alphabet. Further, the channel information comprises a channel number having the number or a channel name having the alphabet.

Preferably, the plural items of channel information include a different major channel numbers each of which may have minor channel numbers.

For a better understanding of the invention, and to show how embodiments of the same may be carried into effect, reference will now be made, by way of example, to the accompanying diagrammatic drawings in which:
FIG. 1 illustrates a broadcast receiving apparatus according to an embodiment of the present invention;
FIG. 2 illustrates an example of the tuning process according to an embodiment of the present invention;
FIG. 3 illustrates another example of the tuning process according to an embodiment of the present invention; and
FIG. 4 is a flowchart of an operation of the broadcast receiving apparatus according to an embodiment of the present invention.

Reference will now be made in detail to the embodiments of the present invention, examples of which are illustrated in the accompanying drawings, wherein like reference numerals refer to like elements throughout.

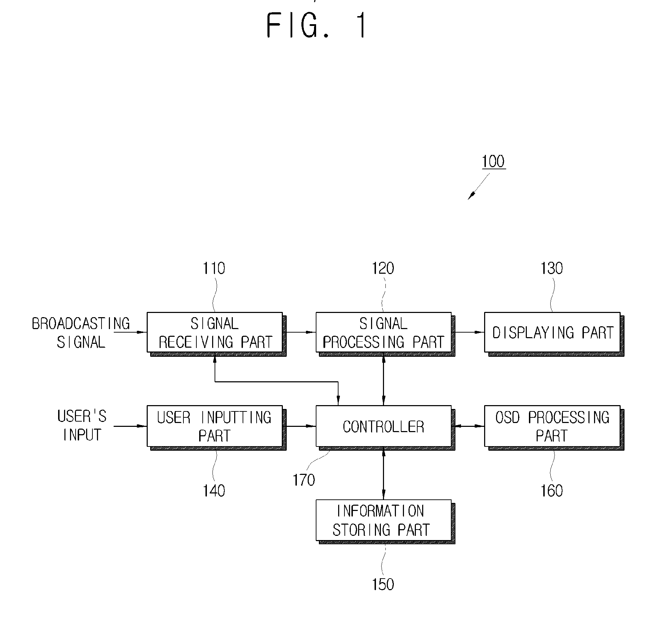

FIG. 1 illustrates a broadcast receiving apparatus 100 according to an embodiment of the present invention. The broadcast receiving apparatus 100 receives a various types of broadcast such as terrestrial broadcast, cable broadcast, satellite broadcast and the like, and suitably processes the received broadcast signal. Then, the broadcast receiving apparatus 100 displays an image of the processed broadcast signal. The broadcast receiving apparatus 100 may be realized with a TV as an example. Furthermore, the TV may be of a digital television broadcast receiving device. Additionally, the broadcast receiving device may also be a set-top box type, computer implemented (e.g. computer card) or any other form for receiving various types of broadcast including above mentioned broadcast as well as IPTV which may also have channel numbers to select from.

The broadcast receiving apparatus 100, as shown in FIG. 1, comprises a signal receiving part 110, a signal processing part 120, a displaying part 130, a user inputting part 140, an information storing part 150, an OSD processing part 160 and a controller 170.

The signal receiving part 110 receives a broadcast signal from terrestrial broadcast, cable broadcast, satellite broadcast and the like. The signal receiving part 110 may be realized with a so-called tuner. The signal receiving part 110 is tuned to one channel among a plurality of channels. The signal receiving part 110 is tuned to a broadcast signal corresponding to a channel selected by a user according to a control of the controller 170. The signal receiving part 110 is tuned to the broadcast signal with reference to a frequency corresponding to the channel selected by a user.

The signal processing part 120, according to a broadcast signal received by the signal receiving part 110, processes the broadcast signal so that an image can be displayed on the displaying part 130. For example, the signal processing 120 may operates a decoding function decoding image information from the received broadcast signal, a scaling function scaling the resolution of an image decoded according to the displaying part 130's properties and a user's setting, a picture enhancement function enhancing picture quality and the like. It is preferable but not necessary that the signal processing part 120 processes a signal according to types of the received broadcast signal and the displaying part 130.

The displaying part 130 displays an image on the basis of the broadcast signal processed by the signal processing part 120. The displaying part 130 may be realized as various types such as a CRT (cathode ray tube), a LCD (liquid crystal display), a PDP (plasma display panel), a DLP (digital light processing), an OLED (organic light-emitting diode), a SED (surface-conduction electron-emitter display), a FED (field emission display) and the like.

The user inputting part 140 receives a user's instruction. A user inputs selecting information on the user inputting part 140 to select one of plural channels. The selecting information according to an embodiment of the present invention may comprise a number or an alphabet. When necessary, the user inputting part 140 may be realized as a remote controller, a manipulating panel or the like. The user inputting part 140 may comprise a button corresponding to a number and/or an alphabet.

Channel information corresponding to a plurality of channels is stored in the information storing part 150. Channel information according to an embodiment of the present invention may comprise a channel number having a number or a channel name having an alphabet. Also, in the information storing part 150, necessary data for an operation of the controller 170 may be stored.

The OSD processing part 160 generates and processes OSD data corresponding to channel information of a plurality of channels. The signal processing part 120, according to a control of the controller 170, processes an image on the basis of a broadcast signal and another image on the basis of OSD data generated by the OSD processing part 160 so that both of these images are displayed on the displaying part 130 as one image.

The controller 170 controls various other elements of the broadcast receiving apparatus 100. In accordance with the user inputting a selecting information, the controller 170 controls the displaying part 130 so that at least one item of channel information corresponding to an item of inputted selecting information is displayed. Also, the controller 170 controls the signal receiving part 110 so that a broadcast signal corresponding to an item of channel information selected according to an input of selecting information is received among items of displayed channel information.

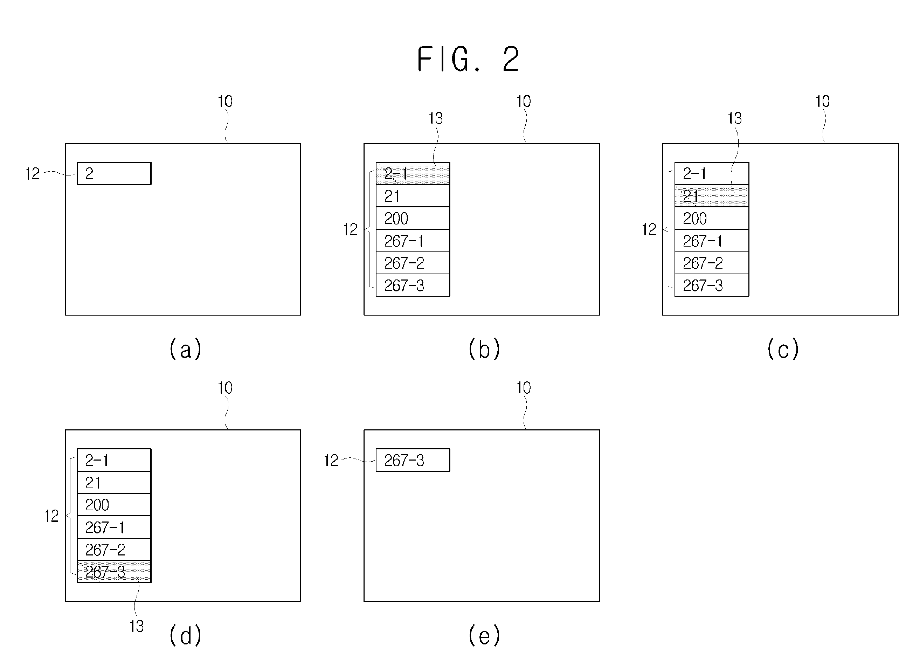

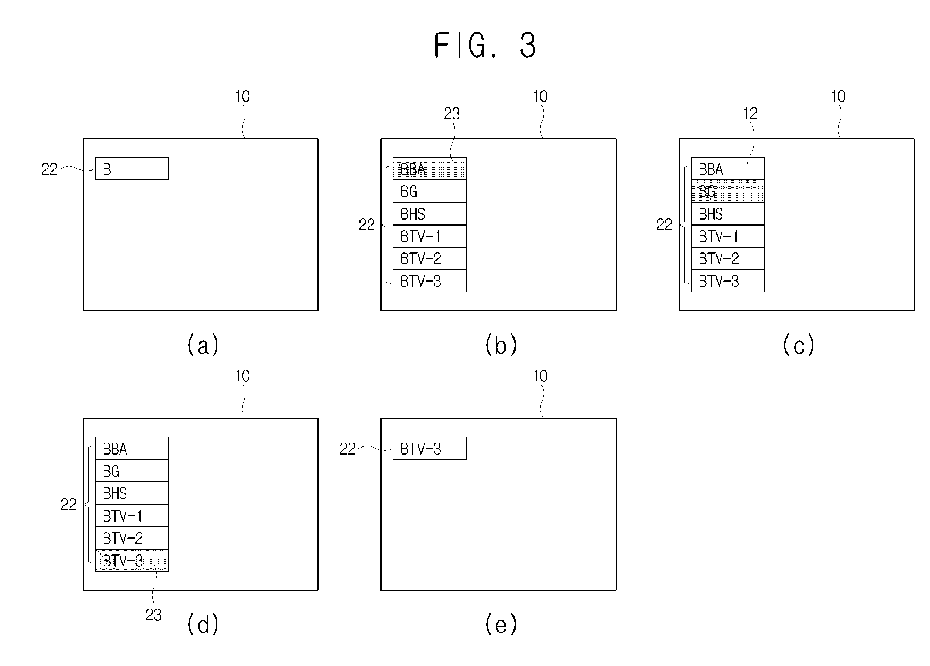

FIGS. 2 and 3 illustrate a controller according to an embodiment of the present invention. When the controller 170 determines that a user inputs a number 2 through the user inputting part 140, the controller 170 controls the OSD processing part 160 so that an OSD image 12 indicating the number 2 is displayed on a screen 10 of the displaying part 130 as channel information (refer to FIG. 2(a)). Here, the controller 170 may determine that the number 2 is inputted when a button corresponding to the number 2 is pushed.

The controller 170 checks whether the button corresponding to the number 2 is continuously pressed during a predetermined first time. If so, the controller 170 may determine that the number 2 is inputted as channel information. Here, the first time according to an embodiment of the present invention may be of 1 second. At this time, the controller 170 searches channel information about the number of 2 as an item of channel information in the information storing part 150. Then, the controller 170 controls the OSD processing part 160 so that the OSD image 12 indicating a searched channel number is displayed on the screen 10 of the displaying part 130 (refer to FIG. 2(b)).

The controller 170 controls the OSD processing part 160 so that a plurality of channel numbers is sequentially highlighted and displayed (refer to FIG. 2(b) through 2(d)). The controller 170, first of all, allows the channel number of 2-1 on a first box 13 to be highlighted (refer to FIG. 2(b)). After channel information is displayed, when the controller 170 determines that the number 2 is continuously pressed during a predetermined second time, the controller 170 allows the next number 21 on a second box 13 to be highlighted (refer to FIG. 2(c)). Here, the second time according to an embodiment of the present invention may be of 1 second. In the same way, the controller 170 allows the next channel numbers to be highlighted sequentially and displayed according to subsequent continuous pressing of the number 2 key.

When the controller 170 determines that an input of selecting information is finished, that is, when the key is released, the controller 170 will determine that the highlighted and displayed item of channel information at the time is selected as the channel for tuning. For example, when the channel number of 267-3 on the bottom box 13 is highlighted (refer to FIG. 2(d)), when the controller 170 determines that a continuous pressing of the number key 2 has ended, the controller 170 will determine that the channel number 267-3 on the box 13 is selected for tuning. At this time, the controller 170 controls the signal receiving part 110 so that a broadcast signal corresponding to the channel having the channel number 267-3 is received. Also, the controller 170 allows an item 12 of channel information indicating that a broadcast signal of the channel number 267-3 is received to be displayed (refer to FIG. 2(e)).

In the meanwhile, when a plurality of numbers are inputted as selecting information, the controller 170 may control the signal receiving part 110 so that a broadcast signal having a channel number comprising the inputted numbers is received. For example, when the numbers 2 and 6 are inputted, the controller 170 allows a broadcast signal having the channel number comprising the number of 26 to be received. Accordingly, the initial pressing of a key corresponding to the number 2 on the remote controller or on the main body of the broadcast receiving apparatus 100, in the above example, may constitute a first selecting information and releasing of the same key may constitute the a second selecting information inputted by the user which will ultimately select the specific channel for tuning. Furthermore, as described above, the duration of the pressing of the key may cause an indication of the plurality of channels to be displayed and may cause the highlighting of a channel among the indicated plurality of channels to change.

Another embodiment of the present invention will be described in the case the selecting information comprises an alphabet and the channel information comprises a channel name having an alphabet. The same description in this embodiment may be omitted.

If the controller 170 determines that a user inputs the alphabet B through the user inputting part 140, the controller 170 controls the OSD processing part 160 so that the OSD image 22 indicating the alphabet B is displayed on the screen 10 as channel information(refer to FIG. 3(a)).

When the controller 170 determines that the alphabet B is continuously pressed during a first predetermined time, the controller 170 searches a channel name having the alphabet B in the information storing part 150. Then, the controller 170 controls the OSD processing part 160 so that the OSD image 12 indicating the searched channel name is displayed on the screen 10 (refer to FIG. 3(b)).

After channel information is displayed, whenever the controller 170 determines that the alphabet B is continuously pressed during a second predetermined time, the controller 170 controls the OSD processing part 160 so that a plurality of channel names such as BBA, BG and the like is sequentially highlighted and displayed (refer to FIG. 3(b) through 3(d)).

Furthermore, in the state that the channel name BTV-3 on the bottom box 23 is highlighted (refer to FIG. 3(d)), when the controller 170 determines that an input of the alphabet B has been finished, that is when the key is released, the controller 170 controls the signal receiving part 110 so that a broadcast signal corresponding to the channel having the channel name BTV-3 is received. Also, the controller 170 allows an item 22 of channel information indicating the receiving of the channel name BTV-3 to be displayed (refer to FIG. 3(e)).

The controller 170 according to the embodiment of the present invention may be realized with a computer program where the operating function described above is programmed. At this time, the broadcast receiving apparatus 100 may further comprise a microprocessor (not shown) such as CPU for an execution of a computer program and a memory (not shown) such as ROM and RAM where the computer program is stored and loaded.

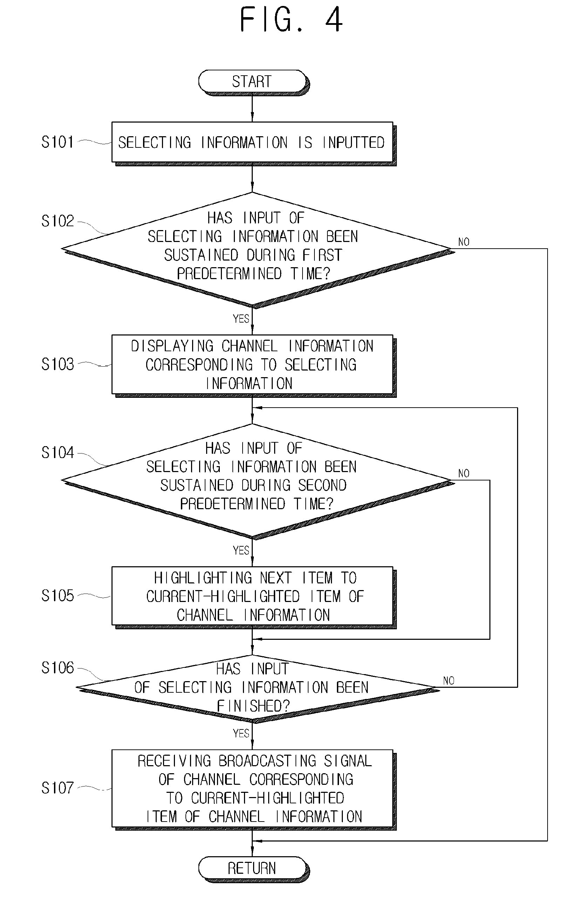

FIG. 4 is a flowchart of an operation of the broadcast receiving apparatus according to an embodiment of the present invention. The controller 170 checks whether a user inputs selecting information through the user inputting part 140 (S101). When the selecting information is inputted, the controller 170 checks whether the input of the selecting information has been sustained during a first predetermined time (S102). When the input of the selecting information was not sustained during the first predetermined time, the controller 170 returns to the operation S101.

If the controller 170 determines that the input of the selecting information has been sustained during the predetermined first time at operation S102, the controller 170 controls the OSD processing part 160 and the signal processing part 120 so that the channel information corresponding to the selecting information is displayed on the displaying part 130 (S103). As shown in the FIGS. 2 and 3, the channel information may include different major channel numbers, each of which may have minor channel numbers.

After the channel information is displayed, when the controller 170 checks whether the input of the selecting information has been sustained during a second predetermined time (S104). After the channel information is displayed, when the controller 170 determines that the input of the selecting information has not been sustained during the predetermined second time, the controller 170 operates the operation S106 described below.

After the channel information is displayed at operation S104, when the controller 170 determines that the input of the selecting information has been sustained during the second predetermined time, the controller 170 controls the OSD processing part 160 and the signal processing part 120 so that a next item to the current-highlighted item of channel information is highlighted (S105).

The controller 170 checks whether an input of selecting information has been finished (S106), that is whether the key has been released or not. When the controller 170 determines that the input of selecting information has not been finished, the controller 170 operates the operation S104.

If the controller 170 determines that the input of selecting information has been finished, the controller controls the signal receiving part 110 so that a broadcast signal of a channel corresponding to the current-highlighted item is received (S107).

As described above, according to the present invention, there is provided a broadcast receiving apparatus and a method thereof capable of selecting a channel promptly without difficulty by allowing the user to see an indication of available channels that are corresponding to the user's selection of initial digit and/or a part of a name of the channel for convenient selection of the desired channel.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus comprising:
a signal receiving part (110) for receiving a broadcast signal corresponding to one of a plurality of channels;
a user inputting part (140) where a user may input a first selecting information of the channel;
a processor (120) for generating an indication of a plurality of channels for visual display; and
a controller (170) for controlling the processor (120) to generate the indication of a plurality of channels corresponding to the inputted first selecting information, and controlling the signal receiving part (110) to receive a broadcast signal corresponding to a selected channel, among the indicated plurality of channels, according to an input of a second selecting information.

2. The broadcast receiving apparatus according to claim 1, wherein, when an input of the first selecting information has been sustained during a first time, the controller (170) is operable to control an indication of a plurality of channels to be generated by the processor (120).

3. The broadcast receiving apparatus according to claim 1 or claim 2, wherein, when an input of the first selecting information has been sustained, the controller (170) is operable to control at least one channel among the indicated plurality of channels to be highlighted.

4. The broadcast receiving apparatus according to claim 3, wherein while an input of the first selecting information has been sustained during a second time after one of the channels among the indicated plurality of channels is highlighted, the controller (170) is operable to control another channel among the indicated plurality of channels to be highlighted.

5. The broadcast receiving apparatus according to claim 3 or claim 4, wherein the controller (170) determines that the channel selected is the channel highlighted at a point of time when the second selecting information is received.

6. The broadcast receiving apparatus according to any preceding claim, wherein the first selecting information comprises a number and/or an alphabet.

7. The broadcast receiving apparatus according to claim 6, wherein the channel indication comprises a channel number having the number or a channel name having the alphabet.

8. The broadcast receiving apparatus according to any preceding claim, wherein first selecting information is an input of a channel number and/or a name by a user.

9. The broadcast receiving apparatus according to claim 8, wherein the indication of a plurality of channels is generated in response to a pressing of a key corresponding to the channel number and/or a name for a first predetermined time.

10. The broadcast receiving apparatus according to claim 9, wherein a channel among the indicated plurality of channels is highlighted when the processor (120) generates the indication of a plurality of channels.

11. The broadcast receiving apparatus according to claim 10, wherein the indication of a plurality of channels is displayed on a display part (130).

12. The broadcast receiving apparatus according to claim 10 or claim 11, wherein another one of the channels among the indicated plurality of channels is emphasized when the key is pressed for a subsequent second predetermined time.

13. The broadcast receiving apparatus according to claim 12, wherein the second selecting information is determined to be received by the controller (170) when the key is released.

14. The broadcast receiving apparatus according to claim 13, wherein the emphasized channel is caused to be selected when the second selecting information is received by the controller (170).

15. The broadcast receiving apparatus according to any preceding claim, wherein the indicated channels corresponding to the first selection information includes channel numbers and/or channel names which include a number and/or a character inputted by the first selecting information.

16. The broadcast receiving apparatus according to claim 15, wherein the indicated channel numbers include channels numbers having different number of digits.

17. The broadcast receiving apparatus according to claim 15 or claim 16, wherein the indicated channel numbers include at least two different major channel numbers.

18. The broadcast receiving apparatus according to any one of claims 15 to 17, wherein the indicated channels include channels having combination of channel names and channel numbers.

19. The broadcast receiving apparatus according to claim 18, wherein the channel numbers of the combination are indicative of minor channels.

20. The broadcast receiving apparatus according to claim 19, wherein the broadcast receiving apparatus is a digital television.

21. The broadcast receiving apparatus according to any preceding claim, wherein the broadcast receiving apparatus is a IPTV receiver.

22. A broadcast receiving method comprising:
receiving a selecting information from a user;
generating a plurality of items of channel information corresponding to the inputted selecting information;
checking whether a user selects one among the generated items of channel information; and
receiving a broadcast signal corresponding to the selected channel information.

23. The broadcast receiving method according to claim 22, wherein the displaying the plural items of channel information, when an input of the selecting information has sustained during a first time, displays the plural items of channel information on the displaying part.

24. The broadcast receiving method according to claim 22 or claim 23, wherein the displaying the items of channel information, while the input of the selecting information has sustained, emphasizes at least one item of channel information sequentially to display.

25. The broadcast receiving method according to claim 24, wherein the displaying the items of channel information, when the input of the selecting information has sustained during a second time since one of the plural items of channel information was emphasized and displayed, emphasizes another of the plural items of channel information to display.

26. The broadcast receiving method according to claim 24 or claim 25, wherein the channel information checking determines that the channel information, which was emphasized and displayed when the input of selecting information is finished, is selected.

27. The broadcast receiving method according to any one of claims 22 to 26, wherein the channel information comprises a channel number having the number or a channel name having the alphabet.

28. The broadcast receiving method according to claim 27, wherein the selecting information comprises a number or an alphabet.

29. The broadcast receiving method according to any one of claim 22 to 28, wherein the items of channel information include channels numbers having different number of digits.

30. The broadcast receiving method according to any one of claims 22 to 29, wherein the items of channel information include at least two different major channel numbers.

31. The broadcast receiving method according to any one of claims 22 to 30, wherein the items of channel information include channels having combination of channel names and channel numbers.

32. The broadcast receiving method according to claim 31, wherein the channel numbers of the combination are indicative of minor channels.

33. The broadcast receiving method according to any one of claims 22 to 32, wherein the broadcast receiving is performed by a television apparatus.

34. The broadcast receiving method according to any one of claims 22 to 33, wherein the broadcast receiving is performed by an IPTV apparatus.

35. The broadcast receiving method according to any one of claims 22 to 34, wherein the broadcast receiving is performed by a computer implemented apparatus.

36. The broadcast receiving method according to any one of claims 22 to 35, wherein the emphasizing is performed by highlighting the items of channel information.
